# EUROPÄISCHE PATENTSCHRIFT

(11) **EP 2 625 945 B1**
(45) Veröffentlichungstag und Bekanntmachung des Hinweises auf die Patenterteilung: **20.04.2016**
(21) Anmeldenummer: 13000697.6
(22) Anmeldetag: 11.02.2013
(51) Int. Cl.: A01C 17/00

(54) **Verfahren zur Drehmomenterfassung der Verteilerscheiben eines Scheibenstreuers und entsprechender Scheibenstreuer**
Method for torque sensing for distributor discs of a disc distributor and respective disc distributor
Procédé de détection de couple des disques d'épandage d'un épandeur à disques et tel épandeur à disques

(30) Priorität: 13.02.2012 DE 102012002585
(43) Veröffentlichungstag der Anmeldung: 14.08.2013
(73) Patentinhaber: RAUCH Landmaschinenfabrik GmbH, 76547 Sinzheim (DE)
(72) Erfinder: Rauch, Norbert, D-76547 Sinzheim (DE); Stöcklin, Volker, M. Sc., D-77975 Ringsheim (DE); Mandlier, Maximilian, D-76547 Sinzheim (DE); Zeitvogel, Thomas, D-77836 Rheinmünster (DE)
(74) Vertreter: Lichti - Patentanwälte Partnerschaft mbB

(56) Entgegenhaltungen:
- EP-A1- 0 963 690
- EP-A2- 1 008 288
- US-A1- 2007 114 995

## Beschreibung

Die Erfindung betrifft ein Verfahren zur Ermittlung des Ist-Massenstroms von Streugut, welches von wenigstens einem einstellbaren Dosierorgan eines Scheibenstreuers wenigstens einer, dem Dosierorgan zugeordneten Verteilerscheibe aufgegeben wird, wobei mittels eines rechnergesteuerten Regelgerätes ein Soll-Massenstrom des Streugutes in Abhängigkeit wenigstens eines Parameters aus der Gruppe
- aktuelle Fahrgeschwindigkeit des Scheibenstreuers;
- Soll-Streumenge pro Fläche; und
- Arbeitsbreite
ermittelt und das Dosierorgan gemäß dem derart ermittelten Soll-Massenstrom geregelt wird, und wobei ferner der Ist-Massenstrom des mittels der Verteilerscheibe ausgebrachten Streugutes ermittelt wird, indem das für den Ist-Massenstrom repräsentative Drehmoment in einem Antriebsstrang eines Antriebs der Verteilerscheibe berührungslos sensorisch ermittelt wird.

Die Erfindung bezieht sich ferner auf einen insbesondere zur Durchführung eines solchen Verfahrens geeigneten Scheibenstreuer mit wenigstens einer Verteilerscheibe, welche von einem Antriebsstrang eines Antriebs in Rotation versetzbar ist, und mit wenigstens einem einstellbaren Dosierorgan, welchem die Verteilerscheibe zugeordnet ist, wobei das einstellbare Dosierorgan von einem rechnergesteuerten Regelgerät steuerbar ist, indem wenigstens ein Parameter aus der Gruppe
- aktuelle Fahrgeschwindigkeit des Scheibenstreuers;
- Soll-Streumenge pro Fläche; und
- Arbeitsbreite
in den Rechner eingebbar ist, um hieraus einen Soll-Massenstrom zu ermitteln, und das Dosierorgan gemäß dem derart ermittelten Soll-Massenstrom regelbar ist, wobei ferner der Antriebsstrang der Verteilerscheibe mit wenigstens einem berührungslosen Sensor zur Erfassung des Drehmomentes ausgestattet ist, um aus dem sensorisch ermittelten Drehmoment den Ist-Massenstrom des mittels der Verteilerscheibe ausgebrachten Streugutes zu ermitteln.

Derartige Scheibenstreuer finden insbesondere in Form von Zweischeiben-Düngerstreuern in der Landwirtschaft zur Verteilung von Streugut, wie mineralischen oder organischen Dünger und dergleichen, aber auch in Form von Winterdienststreuern zur Verteilung von Streusalz und/oder Splitt verbreiteten Einsatz. Ihre Vorteile liegen dabei vornehmlich in ihrer einfachen Bedienbarkeit und hohen Leistungsfähigkeit bei verhältnismäßig geringen Investitionskosten.

Um für die gewünschte Verteilung des Streugutes auf dem Boden zu sorgen, lassen sich bei gattungsgemäßen Scheibenstreuern einerseits die Dosierung des Massenstromes des Streugutes auf die einem jeweiligen Dosierorgan zugeordnete Verteilerscheibe, andererseits die Verteilung des Streugutes durch die Verteilerscheibe(n) einstellen bzw. regeln. Für letzteres ist es üblich, Einstellmittel zum Einstellen des Scheibenstreuers auf verschiedene Arbeitsbreiten, Streugüter und/oder Verteilarten vorzusehen. In Bezug auf die erstgenannte Dosierung des Streugutes hat es sich bewährt, dass ein rechnergestütztes Regelgerät einen Soll-Massenstrom an zu verteilendem Streugut aus einem oder insbesondere mehreren wählbaren Parametern, wie der aktuellen Fahrgeschwindigkeit, der Soll-Streumenge pro Flächeneinheit, der gewünschten Arbeitsbreite etc., ermittelt und das Dosierorgan gemäß dem derart ermittelten Soll-Massenstrom regelt, was insbesondere anhand wenigstens einer oder mehrerer in dem Rechner hinterlegten Kennlinien geschehen kann, welche die Korrelation des jeweiligen Parameters mit dem zugehörigen Massenstrom an Streugut beschreiben. Vorteilhafterweise können darüber hinaus von dem jeweiligen Streugut abhängige Fließfaktoren als weitere Parameter eingegeben werden, wobei ein solcher Fließfaktor die Korrelation zwischen dem Massenstrom und der vom Fließverhalten des Streugutes abhängigen Aktuatorposition bei der Dosierung beschreibt. Hierdurch ist es möglich, die Kennlinien, welche die genannten, wählbaren Parameter mit dem hieraus zu bestimmenden Soll-Massenstrom korrelieren, unter Berücksichtigung der Fließeigenschaften des verwendeten Streugutes mit einer noch höheren Genauigkeit festzulegen.

Was die Streugutdosierung betrifft, so haben sich insbesondere zwei verschiedene Varianten zur Messung und Regelung des Ist-Massenstromes an Streugut durchgesetzt:
Gemäß einer ersten Variante zur Messung und Regelung des auf die Verteilerscheibe aufgegebenen Ist-Massenstromes an Streugut wird der gesamte Streugutbehälter des Scheibenstreuers fortwährend, d.h. auch während der Fahrt, mittels Wiegezellen gewogen, so dass sich aus dem pro Zeiteinheit ermittelten Gewichtsverlust der tatsächliche Massenstrom des Streugutes errechnen lässt (EP 0 982 571 A1). Von Vorteil ist hierbei insbesondere die universelle Verwendbarkeit einer solchen Messanordnung unabhängig von einem hydraulischen oder mechanischen Antrieb der Verteilerscheibe. Als nachteilig hat sich indes einerseits erwiesen, dass mit einer solchen Wiegetechnik nur der gesamte Massenstrom an Streugut ermittelt werden kann, was es im Falle eines Zweischeibenstreuers, bei welchem die Verteilerscheiben häufig mit unterschiedlichen Massenströmen an Streugut beaufschlagt werden müssen (sofern z.B. eine unterschiedliche Streubreite auf beiden Seiten erwünscht ist), unmöglich macht, die einzelnen Massenströme (pro Verteilerscheibe) zu ermitteln. Andererseits ist das mit Wiegezellen ausgestattete System verhältnismäßig träge, weil die pro Zeiteinheit dosierte Masse des Streugutes im Verhältnis zu der Gesamtmasse des Streugutbehälters sehr klein ist und daher eine zeitlich relativ lange Mittelung der von den Wiegezellen ermittelten Messwerte erforderlich ist. Dies ist um so problematischer, je erschütterungsintensiver die Fahrt des Scheibenstreuers auf unebenem Untergrund vonstatten geht.

Gemäß einer zweiten Variante wird zur Messung und Regelung des Massenstromes an Streugut das für diesen Massenstrom repräsentative Drehmoment in einem Antriebsstrang eines Antriebs der bzw. einer jeden Verteilerscheibe ermittelt, welches sich daraus ergibt, dass das auf die Verteilerscheibe(n) auftreffende Streugut mittels deren Wurfschaufeln von der Scheibe fort beschleunigt wird. Die DE 198 25 917 A1 beschreibt einen gattungsgemäßen Schleuderstreuer zum Verteilen von Streugut mit variabler Arbeitsbreite und bei variabler Fahrzeuggeschwindigkeit, welcher einen Vorratsbehälter, eine oder zwei rotatorisch angetriebene Verteilerscheibe(n) mit Wurfschaufeln, Mitteln zum Einstellen des Streuers auf verschiedene Arbeitsbreiten und Düngersorten und ein verstellbares Dosierorgan aufweist, welches von einem rechnergestützten Regelgerät steuerbar ist. In den Rechner sind die Fahrgeschwindigkeit, die Sollstreumenge pro Fläche und die Arbeitsbreite eingebbar. Ferner sind in dem Rechner für jede Einstellung der Einstellmittel Kennlinien für die Beziehung zwischen dem Drehmoment der Verteilerscheibe und dem Massenstrom in Abhängigkeit von der Drehzahl einschließlich einer Leerlauf-Kennlinie für den Massenstrom null hinterlegt. Mittels je eines Sensors werden das Drehmoment und die Drehzahl des Rotationsantriebs aufgenommen. Die Ausgangsgröße des Drehmoment-Sensors vergrößert sich mit zunehmendem Ist-Massenstrom. Nach Abgleich mit dem Soll-Massenstrom unter gleichzeitiger Kompensation eventueller Drehzahlschwankungen wird die Abweichung als Stellgröße für das Dosierorgan genutzt. Während bei einem hydraulischen Antrieb der Verteilerscheibe(n) der Druckabfall des Hydromotors sensorisch ermittelt wird, wird bei einem elektrischen Antrieb der Verteilerscheibe(n) die Stromaufnahme des Elektromotors sensorisch erfasst. Im Falle eines mechanischen Antriebs der Verteilerscheibe(n) kommen Dehnungsmessstreifen und/oder Schleifkontakt zum Einsatz. Nachteilig ist einerseits wiederum die von dem jeweiligen Antrieb abhängige Erfassung des Drehmomentes, andererseits sind der Messgenauigkeit Grenzen gesetzt und eignet sich die Sensorik nur bedingt für einen robusten Einsatz, wie insbesondere in der Landwirtschaft.

Die EP 0 963 690 A1, welche die Priorität der vorgenannten DE 198 25 917 A1 in Anspruch nimmt, beschreibt einen ähnlichen Schleuderstreuer, wobei zur Ermittlung des Drehmomentes der Verteilerscheiben im Falle eines mechanischen Antriebs derselben ferner zwei auf einer Querwelle, welche die jeweiligen, die Verteilerscheiben tragenden, vertikalen Wellen über Kegelzahnräder antreibt, mit Abstand angeordnete Inkrementalgeber vorgesehen sind, welchen Impulsaufnehmer zugeordnet sind, um die Torsion der Welle bzw. das hierfür repräsentative Drehmoment zu erfassen. Hierbei kommen unter anderem berührungslose Inkrementalgeber bzw. Impulsaufnehmer in Betracht. Im Leerlauf, d.h. ohne Beaufschlagung der Verteilerscheiben bei geschlossenem Dosierorgan, ergibt sich folglich einerseits ein Maß für das Leerlaufdrehmoment, während andererseits im Falle einer Beaufschlagung der Verteilerscheiben mit einem Soll-Massenstrom an Streugut die Impulsaufnehmer eine Phasenverschiebung erkennen, welche für das Gesamtdrehmoment, welches aus der Subtraktion des Leerlaufdrehmomentes von dem Ist-Massenstrom-Drehmoment resultiert, repräsentativ ist. Als nachteilig hat sich erwiesen, dass sowohl die - üblicherweise über ein Eckgetriebe an die Gelenkwelle einer Zugmaschine, wie eines Traktors oder dergleichen, anschließbare - Querwelle als auch das die Impulsaufnehmer tagende Gehäuse unter der Drehmomentlast des Antriebs der Zapfwelle der Zugmaschine erheblichen Torsionen ausgesetzt sind, welche allein zu veränderlichen Abständen der Inkrementalgeber relativ zu den Impulsaufnehmern und folglich zu verhältnismäßig großen Messfehlern führen. Hinzu kommen sensorisch erfasste Fehler aufgrund Veränderungen des Widerstandes in dem Antriebsstrang (beispielsweise infolge temperaturabhängiger Ölviskosität, Lagerwiderständen und/oder Eigenspannungen), welche zu Fehlmessungen des Drehmomentes und somit zu falschen Streugutdosierungen führen können. Um derartige Fehler zu minimieren, ist es zwar möglich, in regelmäßigen Zeitabständen wiederholt Leerlauf-Drehmomentmessungen (bei geschlossenem Dosierorgan) durchzuführen, um mittels der oben erwähnten Subtraktionsmethode ein möglichst genaues gesamtes, durch das Streugut verursachtes Drehmoment zu ermitteln, doch ist die umständlich, weil die Streuarbeit hierfür stets unterbrochen werden muss, die Dosierschieber geschlossen werden müssen und in der Regel auch die Zugmaschine mit dem Scheibenstreuer angehalten werden muss.

Entsprechendes gilt für die aus der DE 101 54 737 C1 bekannte Einrichtung zur Erfassung des Drehmomentes in einem Antriebsstrang der Verteilerscheiben eines Scheibenstreuers, welche die sensorische Messung an einem verjüngten Abschnitt der die Verteilerscheiben über Kegelzahnräder antreibenden Querwelle vorsieht, um die Torsion unter Last bzw. die Messgenauigkeit zu erhöhen. Indes ergibt sich hierdurch keine signifikant verbesserte Messgenauigkeit und vermag das System insbesondere kleine Massenströme (bzw. kleine, hierdurch verursachte Biegemomente) nicht hinreichend zu erfassen, weil der verjüngte Wellenabschnitt in verstärktem Maße in Schwingungen gerät. Zudem ist eine Überlastsicherung in Form eines die entgegengesetzten Enden des verjüngten Wellenabschnittes verbindenden Tragrohres erforderlich, um die vornehmlich beim Einschalten des Antriebs auftretenden Maximalwerte des Drehmomentes aufzunehmen und den verjüngten Wellenabschnitt vor Schaden zu bewahren.

Schließlich ist aus der EP 1 008 288 A2 eine weitere Vorrichtung zur Dosierung und Verteilung von Streugut in Form eines Scheibenstreuers bekannt, welche sich gleichfalls einerseits eines Drehmomentsensors, andererseits eines Drehzahlsensors bedient, um hieraus den Ist-Massenstrom des auf die Verteilerscheibe auftreffenden Streugutes zu ermitteln. Aufgrund der Anordnung beider Sensoren unmittelbar unterhalb der Verteilerscheibe auf der diese tragenden Welle sind die Sensoren indes nicht nur sowohl mechanischen als auch Umwelteinflüssen, wie Feuchtigkeit oder Regen, exponiert und drohen somit während des Betrieb Schaden zu nehmen, sondern ist eine exakte Messung insbesondere des Drehmomentes der Welle auf diese Weise nicht möglich.

Der Erfindung liegt daher die Aufgabe zugrunde, ein Verfahren zur Ermittlung des Ist-Massenstroms von Streugut über das hierfür repräsentative Drehmoment in einem Antriebsstrang eines Antriebs der Verteilerscheibe eines Scheibenstreuers der eingangs genannten Art auf einfache und kostengünstige Weise dahingehend weiterzubilden, dass unter zumindest weitestgehender Vermeidung der oben genannten Nachteile eine insbesondere von der Art des Antriebs sowie von der Umgebungstemperatur weitestgehend unabhängige und präzisere Ermittlung diese Drehmomentes sichergestellt ist, welche robust und gegen während des Betriebs eines gattungsgemäßen Scheibenstreuers üblicherweise auftretenden mechanischen Einwirkungen unempfindlich ist. Sie ist ferner auf einen insbesondere zur Durchführung eines solchen Verfahrens eingerichteten Scheibenstreuer der eingangs genannten Art gerichtet.

In verfahrenstechnischer Hinsicht wird diese Aufgabe bei einem Verfahren der eingangs genannten Art dadurch gelöst, dass das Drehmoment
- an einer Welle des Antriebsstrangs, welche die Verteilerscheibe trägt, oder
- an einem mit einer die Verteilerscheibe tragenden Welle drehfest verbundenen Teil, insbesondere einer Hülse, mittels eines berührungslosen Sensors ermittelt wird, wobei die die Verteilerscheibe tragende Welle einerseits an einem zwischen der Verteilerscheibe und dem Sensor angeordneten Axialabschnitt gelagert und andererseits an einem Axialabschnitt gelagert wird, welcher an der der Verteilerscheibe entgegengesetzten Seite des Sensors angeordnet ist.

In vorrichtungstechnischer Hinsicht sieht die Erfindung zur Lösung dieser Aufgabe bei einem Scheibenstreuer der eingangs genannten Art ferner vor, dass der Sensor
- mit der Welle des Antriebsstrangs, welche die Verteilerscheibe trägt, oder
- mit einem mit einer die Verteilerscheibe tragenden Welle drehfest verbundenen Teil, insbesondere einer Hülse, berührungslos in Wirkverbindung steht, wobei die die Verteilerscheibe tragende Welle einerseits an einem zwischen der Verteilerscheibe und dem Sensor angeordneten Axialabschnitt gelagert und andererseits an einem Axialabschnitt gelagert ist, welcher an der der Verteilerscheibe entgegengesetzten Seite des Sensors angeordnet ist.

Aufgrund der berührungslosen Erfassung des Drehmomentes an der üblicherweise vertikal angeordneten Welle, welche die jeweilige Verteilerscheibe trägt, bleiben insbesondere temperaturabhängige Änderungen von Widerständen in dem Antriebsstrang, wie Schwankungen der Ölviskosität, Lager- und Getriebewiderstände, Eigenspannungen etc., praktisch ohne Einfluss auf die Messung, welche so nahe wie möglich an der Verteilerscheibe selbst erfolgt, auf deren Wurfschaufeln das Streugut auftrifft. Die erfindungsgemäße Erfassung des für den Massenstrom an Streugut repräsentativen Drehmomentes ist darüber hinaus völlig unabhängig vom Antrieb der Verteilerscheibe(n) und folglich für hydraulische (z.B. Hydraulikmotoren), elektrische (z.B. Elektromotoren) oder mechanische Antriebe (z.B. von der Zapfwelle eines Traktors angetriebene mechanische Getriebe) der Verteilerscheiben geeignet, ohne dass Modifikationen vonnöten sind. Die berührungslose Erfassung des Drehmomentes ist im Übrigen robust und weitestgehend unempfindlich gegenüber Erschütterungen, wie sie insbesondere im Falle eines Düngerstreuers, welcher während der Streuarbeit üblicherweise auf unebenem Untergrund bewegt wird, notwendigerweise auftreten. Mit "Welle des Antriebsstrangs, welche die Verteilerscheibe trägt" ist im Sinne der vorliegenden Erfindung im Übrigen die in der Regel vertikal montierte Welle an dem in Bezug auf den Antrieb der Verteilerscheibe stromab gelegenen Ende des Antriebsstrangs angesprochen, auf welcher die Verteilerscheibe drehfest montiert ist, z.B. unmittelbar oder unter Zwischenanordnung geeigneter Adapterstücke, so dass die dortige berührungsfreie Messung des Drehmomentes weitestgehend unbeeinflusst bleibt von stromauf dieser Welle gelegenen Getrieben oder anderen Komponenten des Antriebsstrangs.

Bei der erfindungsgemäßen Ausgestaltung ist es ferner von Vorteil, dass die - in der Regel vertikale - Welle des Antriebsstrangs, welche die Verteilerscheibe trägt, an einem zwischen der Verteilerscheibe und dem Sensor angeordneten Axialabschnitt gelagert ist, während die - üblicherweise vertikale - Welle des Antriebsstrangs, welche die Verteilerscheibe trägt, darüber hinaus an einem Axialabschnitt gelagert ist, welcher an der der Verteilerscheibe entgegengesetzten Seite des Sensors angeordnet ist, so dass der Sensor folglich an einem zwischen den beiden Lagerungen befindlichen Axialabschnitt dieser Welle angeordnet ist. Eine derartige Ausgestaltung ermöglicht nicht nur eine vor äußeren Einwirkungen, wie Streugutpartikel, Staub, Feuchtigkeit etc., geschützte Anordnung des Sensors, sondern stellt insbesondere sicher, dass sich die Welle an ihrem als Messbereich dienenden Axialabschnitt unter Last nicht durchbiegt, was andernfalls die sensorisch erfassten Daten verfälschen könnte.

In vorteilhafter Ausgestaltung kann vorgesehen sein, dass einerseits ein Leerlaufdrehmoment bei geschlossenem Dosierorgan und folglich unbelasteter Verteilerscheibe, andererseits ein Gesamtdrehmoment bei Belastung der Verteilerscheibe mit dem Massenstrom, wie mit dem Ist-Massenstrom, ermittelt wird, wonach das Leerlaufdrehmoment von dem Gesamtdrehmoment subtrahiert wird, um das nur durch den Massenstrom des Streugutes bewirkte Drehmoment zu ermitteln. Auf diese Weise lässt sich - wie grundsätzlich aus der eingangs erwähnten EP 0 963 690 A1 bekannt - das tatsächlich durch den Massenstrom des auf die jeweilige Verteilerscheibe auftreffenden und von deren Wurfschaufeln beschleunigten Streugutes bewirkte Drehmoment ermitteln, indem das sensorisch erfasste Leerlaufdrehmoment (Dosierorgan geschlossen) von dem sensorisch erfassten Gesamtdrehmoment subtrahiert wird. Die Erfindung macht es hierbei aufgrund der hohen Messgenauigkeit unter weitestgehender Eliminierung von äußeren Einflüssen, wie insbesondere der Umgebungstemperatur, möglich, dass das Leerlaufdrehmoment präzise erfasst wird und die Streuarbeit nicht ständig unterbrochen werden muss, um ein sich zwischenzeitlich verändertes Leerlaufdrehmoment neu zu ermitteln. Ein erfindungsgemäßer Scheibenstreuer zeichnet sich in diesem Fall folglich dadurch aus, dass das rechnergesteuerte Regelgerät zur Ermittlung des nur durch den Massenstrom des Streugutes bewirkten Drehmomentes ausgebildet ist, indem es ein Leerlaufdrehmoment, welches bei geschlossenem Dosierorgan und folglich unbelasteter Verteilerscheibe ermittelbar ist, von einem Gesamtdrehmoment, das bei Belastung der Verteilerscheibe mit dem Massenstrom, wie dem Ist-Massenstrom, ermittelbar ist, subtrahiert.

In weiterhin vorteilhafter Ausgestaltung ist vorgesehen, dass im Falle einer Abweichung des ermittelten Ist-Massenstromes (z.B. mittels der oben erläuterten Subtraktion des Leerlaufdrehmomentes bei geschlossenem Dosierorgan von dem Gesamtdrehmoment bei geöffnetem Dosierorgan) von dem Soll-Massenstrom, welche größer ist als ein vorherbestimmter Maximalwert, das Dosierorgan, insbesondere anhand wenigstens einer in dem Rechner hinterlegten Massenstrom-/Drehmomentkennlinie oder einem in dem Rechner abgespeicherten Massenstrom-/Drehmomentkennfeld, so lange nachgeregelt wird, bis die Abweichung des ermittelten Ist-Massenstromes von dem Soll-Massenstrom den vorherbestimmten Maximalwert unterschreitet. Auf diese Weise ist stets sichergestellt, dass die tatsächlich dosierte Menge an Streugut ("Ist-Massenstrom") nicht von dem Soll-Massenstrom, welcher insbesondere die aktuelle Fahrgeschwindigkeit des Scheibenstreuers, die Soll-Streumenge pro Fläche, die Arbeitsbreite sowie gegebenenfalls auch die Fließeigenschaften des jeweiligen Streugutes berücksichtigt, abweicht. Ein entsprechender Scheibenstreuer zeichnet sich demnach dadurch aus, dass das rechnergestützte Regelgerät im Falle einer Abweichung des ermittelten Ist-Massenstromes von dem Soll-Massenstrom, welche größer ist als ein vorherbestimmter Maximalwert, das Dosierorgan, insbesondere anhand wenigstens einer in dem Rechner hinterlegten Massenstrom-/Drehmomentkennlinie oder einem in dem Rechner abgespeicherten Massenstrom-/Drehmomentkennfeld, so lange nachregelt, bis die Abweichung des ermittelten Ist-Massenstromes von dem Soll-Massenstrom den vorherbestimmten Maximalwert unterschreitet.

Bei der Massenstrom-/Drehmomentkennlinie muss es sich nicht notwendigerweise um eine Gerade handeln, sondern sind mit "Kennlinie" insbesondere auch "Kennkurven" angesprochen, wobei als solche Kennlinie insoweit auch eine beliebige mathematische Funktion hinterlegt sein kann, welche die Abhängigkeit des Massenstromes von dem sensorisch erfassten Drehmoment sowie insbesondere auch von der sensorisch erfassten Drehzahl (siehe hierzu weiter unten) beschreibt. Dabei kann es insbesondere auch zweckmäßig sein, wenn die Kennlinie weitere Parameter, wie unterschiedliche Streuscheiben, unterschiedliche Wurfschaufeln bzw. -flügel derselben, unterschiedliche Streu- bzw. Arbeitsbreiten und dergleichen, berücksichtigt, welche entweder als veränderliche Faktoren in die funktionale Abhängigkeit eingehen, oder es sind mehrerer Kennlinien hinterlegt, welche spezifisch für einen oder mehrerer der jeweiligen Parameter ausgewählt werden, um aus dem sensorisch erfassten Drehmoment sowie insbesondere auch der Drehzahl den Massenstrom zu errechnen. Darüber hinaus kann anstelle einer oder mehrerer solcher Kennlinien ein in dem Rechner abgespeichertes Kennfeld vorgesehen sein, welches die typischen und individuellen Abhängigkeiten des Massenstroms von den genannten Parametern berücksichtigt, wobei in einem solchen Kennfeld z.B. das sensorisch erfasste Drehmoment in Abhängigkeit von dem Massenstrom für unterschiedliche Drehzahlen der Verteilerscheibe sowie vorzugsweise auch für unterschiedliche Verteilerscheiben, Wurfschaufeln, Streu- bzw. Arbeitsbreiten und dergleichen gespeichert werden kann.

Bei einem erfindungsgemäßen Scheibenstreuer kann es von Vorteil sein, wenn der an einem Axialabschnitt der die Verteilerscheibe tragenden Welle des Antriebsstrangs angeordnete Sensor sich zwischen der Verteilerscheibe und einem im Bereich deren entgegengesetzten Endes angeordneten Antriebsorgan dieser Welle befindet, d.h. der Sensor ist an einem solchen Axialabschnitt der - in der Regel vertikalen - Welle angeordnet, welcher (in Bezug auf den Antrieb) stromab des Antriebsorgans der die Verteilerscheibe tragenden Welle und stromauf der Verteilerscheibe selbst angeordnet. Das Antriebsorgan selbst kann beispielsweise ein Kegelzahnrad umfassen, welches Teil eines Winkelgetriebes ist, mit welchem der jeweilige Antrieb der Verteilerscheibe in Verbindung steht, um für eine möglichst geringe Bauhöhe des Scheibenstreuers und eine damit verbundene bequeme Befüllung bei einem niedrigen Schwerpunkt desselben zu sorgen.

In weiterhin bevorzugter Ausführung kann vorgesehen sein, dass die aus
- der die Verteilerscheibe tragenden - in der Regel vertikalen - Welle;
- gegebenenfalls dem hiermit drehfest verbundenen Teil, wie einer auf der Welle sitzenden Hülse;
- dem mit der Welle oder dem hiermit drehfest verbundenen Teil berührungslos in Wirkverbindung stehenden Sensor;
- der Lagerung dieser Welle; und
- deren Antriebsorgan
gebildete Einheit in einem Lagergehäuse aufgenommen ist. Ein solches Lagergehäuse nimmt folglich sowohl die die Verteilerscheibe tragende Welle als auch deren Sensorik zur Erfassung ihres Drehmomentes auf, so dass es für verschiedenartige Antriebe der Verteilerscheibe in mehr oder minder identischer Form zum Einsatz gelangen kann und ein Eindringen von flüssigen oder festen Verunreinigungen verhindert, um eine Beeinträchtigung des Sensors zu vermeiden.

Sofern gemäß einer vorteilhaften Weiterbildung der Erfindung die Drehzahl der Welle sensorisch, insbesondere mittels eines berührungslosen Sensors, ermittelt werden soll, kann ferner wenigstens ein, insbesondere berührungsloser, Drehzahlsensor vorgesehen sein, um die Drehzahl der Welle, welche die Verteilerscheibe trägt, sensorisch zu ermitteln. Derartige Sensoren können beispielsweise optisch sein und finden bei gattungsgemäßen Scheibenstreuern bereits Verwendung. Ein solcher Drehzahlsensor kann vorzugsweise ebenfalls in einem Lagergehäuse der vorgenannten Art untergebracht sein.

Gemäß einer besonders vorteilhaften Ausgestaltung kann die Drehzahl der Welle insbesondere mittels desselben, zur Ermittlung des Drehmomentes dienenden Sensors ermittelt werden, was vorzugsweise gleichfalls in berührungsfreier Weise geschehen kann. Bei dem Drehzahlsensor des Scheibenstreuers handelt es sich folglich in bevorzugter Ausführung um denselben, zur Ermittlung des Drehmomentes dienenden Sensor, wie er weiter unten anhand einer beispielhaften Ausführungsform näher erläutert ist.

Wie bereits angedeutet, kann das Antriebsorgan vorzugsweise ein Winkelgetriebe umfassen, an welches der Antrieb der Verteilerscheibe direkt oder unter Zwischenanordnung weiterer Komponenten des Antriebsstrangs anschließbar ist. Das Winkelgetriebe weist hierbei zweckmäßig ein auf der die Verteilerscheibe tragenden Welle selbst sitzendes Kegelzahnrad sowie ein hiermit kämmendes Kegelzahnrad auf, an dessen es tragenden Welle ein jeweiliger Antrieb der Verteilerscheibe anschließbar ist.

Wie ebenfalls bereits erwähnt, kann ein solcher Antrieb der Verteilerscheibe einen Hydraulikmotor, einen Elektromotor oder ein mechanisches Antriebselement aufweisen, welches mit der Zapfwelle einer Zugmaschine, wie eines Traktors, verbindbar ist. Ein Hydraulik- oder Elektromotor kann dabei beispielsweise direkt an das antriebsseitige Ende eines solchen Winkelgetriebes angeflanscht werden. Entsprechendes gilt für einen mechanischen Antrieb, wobei es im Falle eines Zweischeibenstreuers auch möglich ist, einen gemeinsamen Mitteltrieb für den Anschluss der beiden, einer jeweiligen Verteilerscheibe zugeordneten Winkelgetriebe vorzusehen, welcher an die Zapfwelle einer Zugmaschine bzw. eines Traktors anschließbar ist, wobei trotz des gemeinsamen Mitteltriebes eine individuelle Ermittlung des Drehmomentes einer jeden Verteilerscheibe unabhängig voneinander, z.B. in dem jeweiligen Lagergehäuse der Verteilerscheibe, sichergestellt ist.

Was die sensorische Erfassung des Drehmomentes der die Verteilerscheibe tragenden Welle bzw. des hiermit drehfest verbundenen Teils betrifft, so kann das Drehmoment der die Verteilerscheibe tragenden Welle des Antriebsstrangs oder des hiermit drehfest verbundenen Teils, wie einer auf der Welle sitzenden Hülse, vorzugsweise dadurch berührungsfrei ermittelt werden, indem deren für das Drehmoment repräsentative Torsion sensorisch ermittelt wird. Hierzu ist es insbesondere möglich, dass die die Verteilerscheibe tragende Welle oder das hiermit drehfest verbundene Teil aus einem permanentmagnetischen, wie einem ferro- oder ferrimagnetischen, Material magnetisiert und die Veränderung des Magnetfeldes bei Torsion der Welle oder bei Torsion des hiermit drehfest verbundenen Teils sensorisch, insbesondere mittels wenigstens eines Fluxgate-Magnetometers, ermittelt wird. Es wird folglich die Veränderung des Magnetfeldes der insbesondere permanentmagnetisch magnetisierten Welle bzw. der hiermit drehfest verbundenen, magnetisierten Hülse infolge ihrer von dem einwirkenden Drehmoment abhängigen Torsion sensorisch ermittelt, welche aus den magnetoelastischen Eigenschaften der jeweils verwendeten - ferri- oder insbesondere ferromagnetischen - Materialien der Welle bzw. der Hülse resultiert. Die am Umfang der Welle bzw. des hiermit drehfest verbundenen Teils angeordneten Sensoren vermögen die Veränderungen dieses Magnetfeldes zu erfassen (z.B. mittels gegensinniger Empfängerspulen, in welchen in Abwesenheit eines Feldes sich die induzierten Spannungen aufheben, aber im Falle eines anliegenden Magnetfeldes infolge Torsion der Welle bzw. der Hülse ein hieraus resultierendes elektrisches Signal erzeugt wird, welches proportional zu dem Magnetfeld ist). Bei derartigen, auf der Ermittlung von Veränderungen des Magnetfeldes infolge einwirkender Drehmomente bzw. Torsion basierenden Sensoren ist es insbesondere möglich, zugleich die Drehzahl der Welle bzw. des hiermit drehfest verbundenen Teils zu erfassen, indem die Welle bzw. das hiermit drehfest verbundene Teil z.B. entsprechend magnetisch codiert wird. Der Sensor vermag dann auch die Drehzahl zu erfassen, welche beispielsweise auch optisch erfasst werden kann, wie über einen geeigneten Encoder. Derartige Sensoren sind als solche bekannt und werden mit "Fluxgate-Magnetometer" oder "Förster-Sonde" bezeichnet, wobei beispielhaft auf die US 2007/0114995 A1 verwiesen sei.

Bei einem erfindungsgemäßen Scheibenstreuer kann folglich vorzugsweise vorgesehen sein, dass der Sensor die für das Drehmoment repräsentative Torsion der die Verteilerscheibe tragenden Welle oder des hiermit drehfest verbundenen Teils - sowie vorzugsweise auch deren Drehzahl - berührungslos ermittelt.

Die die Verteilerscheibe tragende Welle oder das hiermit drehfest verbundene Teil können hierbei zumindest an ihrem mit dem Sensor ausgestatteten Axialabschnitt insbesondere aus einem permanentmagnetischen, wie einem ferro- oder ferrimagnetischen, Material gefertigt sein, wobei der Sensor die Veränderung des Magnetfeldes der Welle bei deren Torsion ermittelt. Hierbei kann der Sensor (oder können die Sensoren) beispielsweise Fluxgate-Magnetometer umfassen, welche am Umfang der Welle bzw. des hiermit drehfest verbundenen Teils angeordnet sind. Hierbei sollte beachtet werden, dass etwaige Sensorhalterungen oder Lagergehäuse, welche auch die Sensorik aufnehmen, aus nicht ferri- oder ferromagnetischen bzw. aus nicht magnetisierbaren Materialien gefertigt sein sollten, um unerwünschte Einflüsse etwaiger magnetischer Eigenschaften der Halterungen oder Gehäuse auf die sensorisch erfassten Magnetfelder auszuschließen.

Wie bereits angedeutet, bietet sich die Erfindung insbesondere - wenn auch nicht ausschließlich - für Scheibenstreuer an, welche mehrere Verteilerscheiben aufweisen, wie insbesondere für Zweischeibenstreuer, wie sie im Bereich der Landwirtschaft zum Ausbringen von Dünger verbreitet Verwendung finden.

Bei einem solchen Zweischeibenstreuer ist zweckmäßig jeder Verteilerscheibe je ein Dosierorgan, je wenigstens ein mit der Welle des Antriebsstrangs, welche die jeweilige Verteilerscheibe unmittelbar trägt, oder mit einem hiermit drehfest verbundenen Teil berührungslos in Wirkverbindung stehender Sensor, sowie je ein Antriebsorgan zugeordnet, um an jeder Verteilerscheibe für eine individuelle Dosierung von Streugut zu sorgen, welche von der Streugutdosierung anderer Verteilerscheiben unabhängig ist.

Weitere Merkmale und Vorteile der Erfindung ergeben sich aus der nachfolgenden Beschreibung von Ausführungsbeispielen unter Bezugnahme auf die Zeichnungen. Dabei zeigen:
- Fig. 1: eine Querschnittsansicht des endständigen Abschnittes eines Antriebsstrangs der Verteilerscheibe eines Scheibenstreuers mit sensorischer Erfassung des Drehmomentes der die Verteilerscheibe tragenden Welle; und
- Fig. 2: eine der Fig. 1 entsprechende Querschnittsansicht des endständigen Abschnittes eines Antriebsstrangs der Verteilerscheibe eines Scheibenstreuers mit sensorischer Erfassung des Drehmomentes einer Hülse, welche drehfest auf der die Verteilerscheibe tragenden Welle sitzt.

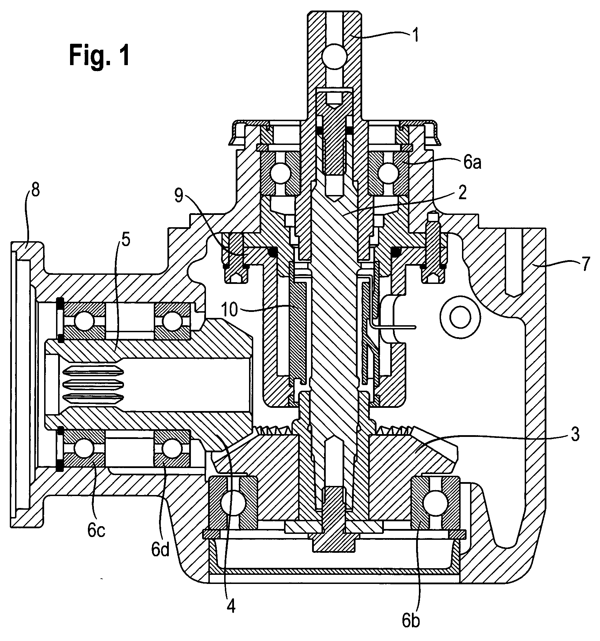

In Fig. 1 ist das abtriebsseitige Ende des Antriebsstrangs der Verteilerscheibe eines im Übrigen nicht gezeigten Scheibenstreuers wiedergegeben, wobei es sich bei dem Scheibenstreuer insbesondere um einen Zweischeibenstreuer handeln kann, welcher demnach zwei separate antriebsseitige Enden des Antriebsstrangs einer jeweiligen Verteilerscheibe umfasst. Die gleichfalls zeichnerisch nicht dargestellte Verteilerscheibe sitzt drehfest auf einem Adapterstück 1, welches seinerseits drehfest am freien (in Fig. 1 oberen) Ende einer sich im Wesentlichen vertikal erstreckenden Welle 2 befestigt ist, welche die Verteilerscheibe somit ohne Zwischenanordnung von Zahnrädern oder Getrieben trägt. An ihrem in Fig. 1 unteren, der Verteilerscheibe entgegengesetzten Ende trägt die Welle 2 ein Antriebsorgan 3, welches im vorliegenden Fall von einem abtriebsseitigen Kegelzahnrad gebildet ist und welches unter Bildung eines Winkelgetriebes mit einem antriebsseitigen Kegelzahnrad 4 kämmt, welches auf einer im Wesentlichen horizontalen Antriebswelle 5 sitzt oder auch einstückig an diese angeformt sein kann. Sowohl die die Verteilerscheibe tragende (vertikale) Welle 2 als auch die Antriebswelle 5 sind mittels Wälzlagern 6a-6d, wie Kugellagern, in einem gemeinsamen Lagergehäuse 7 gelagert, wobei die die Verteilerscheibe tragende Welle 2 z.B. einerseits in ihrem oberen, mit dem Adapterstück versehenen Abschnitt, andererseits am Außenumfang des auf ihrem unteren Axialabschnitt sitzenden Kegelzahnrades 3 gelagert ist. Am Umfang des in Fig. 1 linken, freien Ende der Antriebswelle 5 weist das Lagergehäuse 7 einen Befestigungsflansch 8 auf, um es an einen beliebigen Antrieb, wie einen hydraulischen, elektrischen oder mechanischen Antrieb, der Verteilerscheibe anschließen zu können.

Wie der Fig. 1 ferner zu entnehmen ist, ist in dem Lagergehäuse 7 ein Sensorgehäuse 9 untergebracht, welches von der die Verteilerscheibe tragenden Welle 2 durchsetzt und axial zwischen deren Wälzlagern 6a, 6b angeordnet ist. Das Sensorgehäuse 9 nimmt wenigstens einen Sensor 10 auf, welcher zur berührungslosen Erfassung des Drehmomentes der Welle 2 ausgebildet ist, um einerseits ein Leerlaufdrehmoment, andererseits ein durch auf die Wurfschaufeln der Verteilerscheibe (nicht dargestellt) auftreffendes Streugut verursachtes Drehmoment und hieraus (durch Subtraktion) den exakten Ist-Massenstrom an Streugut ermitteln zu können. Bei dem Sensor 10 kann es sich insbesondere um einen Sensor nach Art eines Fluxgate-Magnetometers handeln, welcher die für das Drehmoment repräsentative Torsion der Welle 2 berührungsfrei ermittelt, indem er beispielsweise die Veränderung des Magnetfeldes der magnetisierten Welle 2 infolge ihrer von dem einwirkenden Drehmoment abhängigen Torsion ermittelt, welche aus den magnetoelastischen Eigenschaften des magnetisierten Wellenmaterials resultiert. In diesem Fall sind die übrigen Komponenten des Lagergehäuses 7 aus einem nicht magnetisierbaren Material gefertigt, um die Sensorik nicht zu beeinflussen. Darüber hinaus kann ein beispielsweise optischer Drehzahlsensor (nicht dargestellt) in dem Lagergehäuse 7 untergebracht sein, um in an sich bekannter Weise die Drehzahl der Welle 2 zu erfassen, oder der Sensor 10 kann insbesondere zugleich zur Erfassung der Drehzahl dienen.

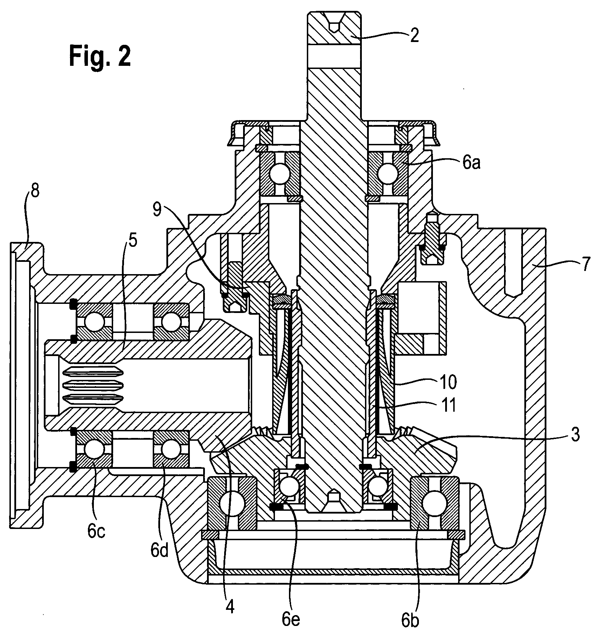

Die in Fig. 2 dargestellte Ausführungsform, bei der identische oder wirkungsgleiche Elemente mit denselben Bezugszeichen versehen sind, unterscheidet sich von der Ausführungsform gemäß Fig. 1 dadurch, dass der berührungsfreie Sensor 10 nicht das Drehmoment der magnetisierten Welle 2 selbst infolge deren Torsion, sondern das Drehmoment eines drehfest mit dieser Welle 2 verbundenen Teils in Form einer auf der Welle 2 sitzenden Hülse 11 infolge Torsion dieser Hülse 11 erfasst, welche ihrerseits aus einem magnetisierten, permanentmagnetischen Material gefertigt ist. Der Momentenpfad, welcher sich bei der Ausführungsform gemäß Fig. 1 von der Antriebswelle 5 über deren Kegelzahnrad 4, das mit diesem kämmende Kegelzahnrad 3 und von diesem unmittelbar in die Welle 2 erstreckt, erstreckt sich in dem in Fig. 2 wiedergegebenen Fall folglich über die Hülse 11 und erst von dort in die Welle 2 selbst, wobei das Kegelzahnrad 3 zu diesem Zweck nur auf der Hülse 11 sitzt, während der untere Abschnitt der Welle 2 mittels eines zusätzlichen Wälzlagers 6e - hier am Innenumfang des Kegelzahnrades 3 - gelagert ist.

## Patentansprüche

1. Verfahren zur Ermittlung des Ist-Massenstroms von Streugut, welches von wenigstens einem einstellbaren Dosierorgan eines Scheibenstreuers wenigstens einer, dem Dosierorgan zugeordneten Verteilerscheibe aufgegeben wird, wobei mittels eines rechnergesteuerten Regelgerätes ein Soll-Massenstrom des Streugutes in Abhängigkeit wenigstens eines Parameters aus der Gruppe
- aktuelle Fahrgeschwindigkeit des Scheibenstreuers;
- Soll-Streumenge pro Fläche; und
- Arbeitsbreite
ermittelt und das Dosierorgan gemäß dem derart ermittelten Soll-Massenstrom geregelt wird, und wobei ferner der Ist-Massenstrom des mittels der Verteilerscheibe ausgebrachten Streugutes ermittelt wird, indem das für den Ist-Massenstrom repräsentative Drehmoment in einem Antriebsstrang eines Antriebs der Verteilerscheibe berührungslos sensorisch ermittelt wird, **dadurch gekennzeichnet, dass** das Drehmoment
- an einer Welle (2) des Antriebsstrangs, welche die Verteilerscheibe trägt, oder
- an einem mit einer die Verteilerscheibe tragenden Welle (2) drehfest verbundenen Teil, insbesondere einer Hülse (11),
mittels eines berührungslosen Sensors (10) ermittelt wird, wobei die die Verteilerscheibe tragende Welle (2) einerseits an einem zwischen der Verteilerscheibe und dem Sensor (10) angeordneten Axialabschnitt gelagert (6a) und andererseits an einem Axialabschnitt gelagert (6b, 6e) wird, welcher an der der Verteilerscheibe entgegengesetzten Seite des Sensors (10) angeordnet ist.

2. Verfahren nach Anspruch 1, **dadurch gekennzeichnet, dass** einerseits ein Leerlaufdrehmoment bei geschlossenem Dosierorgan und folglich unbelasteter Verteilerscheibe, andererseits ein Gesamtdrehmoment bei Belastung der Verteilerscheibe mit dem Massenstrom ermittelt wird, wonach das Leerlaufdrehmoment von dem Gesamtdrehmoment subtrahiert wird, um das nur durch den Massenstrom des Streugutes bewirkte Drehmoment zu ermitteln.

3. Verfahren nach Anspruch 1 oder 2, **dadurch gekennzeichnet, dass** im Falle einer Abweichung des ermittelten Ist-Massenstromes von dem Soll-Massenstrom, welche größer ist als ein vorherbestimmter Maximalwert, das Dosierorgan, insbesondere anhand wenigstens einer in dem Rechner hinterlegten Massenstrom-/Drehmomentkennlinie oder einem in dem Rechner abgespeicherten Massenstrom-/ Drehmomentkennfeld, so lange nachgeregelt wird, bis die Abweichung des ermittelten Ist-Massenstromes von dem Soll-Massenstrom den vorherbestimmten Maximalwert unterschreitet.

4. Verfahren nach einem der Ansprüche 1 bis 3, **dadurch gekennzeichnet, dass** das Drehmoment der die Verteilerscheibe tragenden Welle (2) des Antriebsstrangs oder des hiermit drehfest verbundenen Teils (11) dadurch berührungsfrei ermittelt wird, indem deren für das Drehmoment repräsentative Torsion sensorisch ermittelt wird.

5. Verfahren nach Anspruch 4, **dadurch gekennzeichnet, dass** die die Verteilerscheibe tragende Welle (2) oder das hiermit drehfest verbundene Teil (11) aus einem permanentmagnetischen, ferro- oder ferrimagnetischen, Material magnetisiert und die Veränderung des Magnetfeldes bei Torsion der Welle (2) oder des hiermit drehfest verbundenen Teils (11) sensorisch, insbesondere mittels wenigstens eines Fluxgate-Magnetometers (10), ermittelt wird.

6. Verfahren nach einem der Ansprüche 1 bis 5, **dadurch gekennzeichnet, dass** ferner die Drehzahl der Welle (2) sensorisch, insbesondere mittels eines berührungslosen Sensors, ermittelt wird, wobei die Drehzahl der Welle (2) insbesondere mittels desselben, zur Ermittlung des Drehmomentes dienenden Sensors (10) ermittelt wird.

7. Scheibenstreuer, insbesondere zur Durchführung eines Verfahrens nach einem der vorangehenden Ansprüche, mit wenigstens einer Verteilerscheibe, welche von einem Antriebsstrang eines Antriebs in Rotation versetzbar ist, und mit wenigstens einem einstellbaren Dosierorgan, welchem die Verteilerscheibe zugeordnet ist, wobei das einstellbare Dosierorgan von einem rechnergesteuerten Regelgerät steuerbar ist, indem wenigstens ein Parameter aus der Gruppe
- aktuelle Fahrgeschwindigkeit des Scheibenstreuers;
- Soll-Streumenge pro Fläche; und
- Arbeitsbreite
in den Rechner eingebbar ist, um hieraus einen Soll-Massenstrom zu ermitteln, und das Dosierorgan gemäß dem derart ermittelten Soll-Massenstrom regelbar ist, wobei ferner der Antriebsstrang der Verteilerscheibe mit wenigstens einem berührungslosen Sensor (10) zur Erfassung des Drehmomentes ausgestattet ist, um aus dem sensorisch ermittelten Drehmoment den Ist-Massenstrom des mittels der Verteilerscheibe ausgebrachten Streugutes zu ermitteln, **dadurch gekennzeichnet, dass** der Sensor (10)
- mit der Welle (2) des Antriebsstrangs, welche die Verteilerscheibe trägt, oder
- mit einem mit einer die Verteilerscheibe tragenden Welle (2) drehfest verbundenen Teil, insbesondere einer Hülse (11),
berührungslos in Wirkverbindung steht, wobei die die Verteilerscheibe tragende Welle (2) einerseits an einem zwischen der Verteilerscheibe und dem Sensor (10) angeordneten Axialabschnitt gelagert (6a) und andererseits an einem Axialabschnitt gelagert (6b, 6e) ist, welcher an der der Verteilerscheibe entgegengesetzten Seite des Sensors (10) angeordnet ist.

8. Scheibenstreuer nach Anspruch 7, **dadurch gekennzeichnet, dass** das rechnergesteuerte Regelgerät zur Ermittlung des nur durch den Massenstrom des Streugutes bewirkten Drehmomentes ausgebildet ist, indem es ein Leerlaufdrehmoment, welches bei geschlossenem Dosierorgan und folglich unbelasteter Verteilerscheibe ermittelbar ist, von einem Gesamtdrehmoment, welches bei Belastung der Verteilerscheibe mit dem Massenstrom ermittelbar ist, subtrahiert.

9. Scheibenstreuer nach Anspruch 7 oder 8, **dadurch gekennzeichnet, dass** das rechnergestützte Regelgerät im Falle einer Abweichung des ermittelten Ist-Massenstromes von dem Soll-Massenstrom, welche größer ist als ein vorherbestimmter Maximalwert, das Dosierorgan, insbesondere anhand wenigstens einer in dem Rechner hinterlegten Massenstrom-/Drehmomentkennlinie oder einem in dem Rechner abgespeicherten Massenstrom-/Drehmomentkennfeld, so lange nachregelt, bis die Abweichung des ermittelten Ist-Massenstromes von dem Soll-Massenstrom den vorherbestimmten Maximalwert unterschreitet.

10. Scheibenstreuer nach einem der Ansprüche 7 bis 9, **dadurch gekennzeichnet, dass** der Sensor (10) an einem Axialabschnitt der die Verteilerscheibe tragenden Welle (2) angeordnet ist, welcher sich zwischen der Verteilerscheibe und einem im Bereich deren entgegengesetzten Endes angeordneten Antriebsorgan (3) dieser Welle (2) befindet.

11. Scheibenstreuer nach einem der Ansprüche 7 bis 10, **dadurch gekennzeichnet, dass** die aus
- der die Verteilerscheibe tragenden Welle (2) des Antriebsstrangs;
- gegebenenfalls dem hiermit drehfest verbundenen Teil (11) ;
- dem mit der Welle (2) oder dem hiermit drehfest verbundenen Teil (11) berührungslos in Wirkverbindung stehenden Sensor (10);
- der Lagerung (6a, 6b, 6e) dieser Welle (2); und
- deren Antriebsorgan (3) gebildete Einheit in einem Lagergehäuse (7) aufgenommen ist.

12. Scheibenstreuer nach einem der Ansprüche 7 bis 11, **dadurch gekennzeichnet, dass** ferner wenigstens ein, insbesondere berührungsloser, Drehzahlsensor vorgesehen ist, um die Drehzahl der die Verteilerscheibe tragenden Welle (2) sensorisch zu ermitteln, wobei Drehzahlsensor insbesondere in dem Lagergehäuse (7) untergebracht ist und es sich bei dem Drehzahlsensor vorzugsweise um denselben, zur Ermittlung des Drehmomentes dienenden Sensor (10) handelt.

13. Scheibenstreuer nach einem der Ansprüche 10 bis 12, **dadurch gekennzeichnet, dass** das Antriebsorgan (3) ein Winkelgetriebe (3, 4) umfasst, an welches der Antrieb der Schleuderscheibe direkt oder unter Zwischenanordnung weiterer Komponenten des Antriebsstrangs anschließbar ist.

14. Scheibenstreuer nach einem der Ansprüche 7 bis 13, **dadurch gekennzeichnet, dass** der Sensor (10) die für das Drehmoment repräsentative Torsion der die Verteilerscheibe tragenden Welle (2) oder des hiermit drehfest verbundenen Teils (11) berührungslos ermittelt, wobei die die Verteilerscheibe tragende Welle (2) oder das hiermit drehfest verbundene Teil (11) insbesondere zumindest an ihrem mit dem Sensor (10) ausgestatteten Axialabschnitt aus einem permanentmagnetischen, wie einem ferro- oder ferrimagnetischen, Material gefertigt ist und der Sensor (10) die Veränderung des Magnetfeldes der Welle (2) bzw. des hiermit drehfest verbundenen Teils (11) bei Torsion ermittelt.

15. Scheibenstreuer nach Anspruch 14, **dadurch gekennzeichnet, dass** der Sensor (10) ein Fluxgate-Magnetometer ist.

## Claims

1. Method for determining the actual mass flow rate of granular material which is to be dispensed by at least one adjustable metering element of a disc distributor to at least one distributor disc which is assigned to the metering element, wherein a setpoint mass flow of the granular material is determined by means of a computer-controlled control device as a function of at least one parameter from the group
- current velocity of the disc distributor;
- setpoint distribution quantity per surface area; and
- working width,
and the metering element is controlled in accordance with the setpoint mass flow which is determined in this way, and wherein in addition the actual mass flow of the granular material which is applied by means of the distributor disc is determined in that the torque which is representative of the actual mass flow is determined by sensor in a drive train of a drive of the distributor disc in a contactless fashion, **characterized in that** the torque is determined
- on a shaft (2) of the drive train, which shaft (2) bears the distributor disc, or
- on a part, in particular a sleeve (11), which is connected in a rotationally fixed fashion to a shaft (2) which bears the distributor disc,
by means of a contactless sensor (10), wherein the shaft (2) which bears the distributor disc is mounted (6a), on the one hand, on an axial section which is arranged between the distributor disc and the sensor (10) and is mounted (6b, 6e), on the other hand, on an axial section which is arranged on the side of the sensor (10) lying opposite the distributor disc.

2. Method according to Claim 1, **characterized in that**, on the one hand, an idling torque is determined when the metering element is closed and consequently the distributor disc is not loaded, and, on the other hand, a total torque is determined when the distributor disc is loaded with the mass flow, after which the idling torque is subtracted from the total torque in order to determine the torque which is brought about only by the mass flow of the granular material.

3. Method according to Claim 1 or 2, **characterized in that** in the event of a deviation of the determined actual mass flow from the setpoint mass flow, which deviation is greater than a predetermined maximum value, the metering element is adjusted, in particular on the basis of at least one mass flow/torque characteristic diagram stored in the computer or a mass flow/torque characteristic curve stored in the computer, until the deviation of the determined actual mass flow from the setpoint mass flow undershoots the previously determined maximum value.

4. Method according to one of Claims 1 to 3, **characterized in that** the torque of the shaft (2), bearing the distributor disc, of the drive train or of the part (11) which is connected thereto in a rotationally fixed fashion is determined in a contact-free fashion **in that** the torsion thereof, which is representative of the torque, is determined by sensor.

5. Method according to Claim 4, **characterized in that** the shaft (2) which bears the distributor disc or the part (11) which is connected thereto in a rotationally fixed fashion and is composed of a permanently magnetic, ferromagnetic or ferrimagnetic material is magnetized, and the change in the magnetic field is determined by sensor, in particular by means of at least one flux gate magnetometer (10) in the event of torsion of the shaft (2) or of the part (11) which is connected thereto in a rotationally fixed fashion.

6. Method according to one of Claims 1 to 5, **characterized in that**, in addition, the rotational speed of the shaft (2) is determined by sensor, in particular by means of a contactless sensor, wherein the rotational speed of the shaft (2) is determined, in particular, by means of the same sensor (10) which serves to determine the torque.

7. Disc distributor, in particular for carrying out a method according to one of the preceding claims, with at least one distributor disc which can be set in rotation by a drive train of a drive, and with at least one adjustable metering element to which the distributor disc is assigned, wherein the adjustable metering element can be controlled by a computer-controlled control device, in that at least one parameter from the group
- current velocity of the disc distributor;
- setpoint distribution quantity per surface area; and
- working width
can be input into the computer in order to determine a setpoint mass flow on the basis thereof, and the metering element can be controlled in accordance with the setpoint mass flow determined in this way, wherein, in addition, the drive train of the distributor disc is equipped with at least one contactless sensor (10) for detecting the torque, in order to determine, on the basis of the torque which is determined by sensor, the actual mass flow of the granular material which is discharged by means of the distributor disc, **characterized in that** the sensor (10) is operatively connected in a contactless fashion
- to the shaft (2) of the drive train, which shaft (2) bears the distributor disc or
- to a part, in particular a sleeve (11), which is connected in a rotationally fixed fashion to a shaft (2) which bears the distributor disc,
wherein the shaft (2) which bears the distributor disc is mounted (6a), on the one hand, on an axial section which is arranged between the distributor disc and the sensor (10), and is mounted (6b, 6e), on the other hand, on an axial section which is arranged on the side of the sensor (10) lying opposite the distributor disc.

8. Disc distributor according to Claim 7, **characterized in that** the computer-controlled control device is designed to determine the torque which is brought about only by the mass flow of the granular material, **in that** said control device subtracts an idling torque, which can be determined when the metering element is closed and the distributor disc is consequently not loaded, from a total torque, which can be determined when the distributor disc is loaded with the mass flow.

9. Disc distributor according to Claim 7 or 8, **characterized in that**, in the case of a deviation of the determined actual mass flow from the setpoint mass flow, which deviation is greater than a predetermined maximum value, the computer-assisted control device adjusts the metering element, in particular on the basis of at least one mass flow/torque characteristic curve stored in the computer or a mass flow/torque characteristic diagram stored in the computer, until the deviation of the determined actual mass flow from the setpoint mass flow undershoots the previously determined maximum value.

10. Disc distributor according to one of Claims 7 to 9, **characterized in that** the sensor (10) is arranged on an axial section of the shaft (2) which bears the distributor disc, which axial section is located between the distributor disc and a drive element (3), arranged in the region of the opposite end thereof, of this shaft (2).

11. Disc distributor according to one of Claims 7 to 10, **characterized in that** the unit which is formed from
- the shaft (2), bearing the distributor disc, of the drive train;
- if appropriate the part (11) which is connected thereto in a rotationally fixed fashion;
- the sensor (10) which is operatively connected in a contactless fashion to the shaft (2) or to the part (11) which is connected thereto in a rotationally fixed fashion;
- the bearing (6a, 6b, 6e) of this shaft (2); and
- the drive element (3) thereof
is accommodated in a bearing housing (7).

12. Disc distributor according to one of Claims 7 to 11, **characterized in that**, in addition, at least one, in particular contactless, rotational speed sensor is provided in order to determine by sensor the rotational speed of the shaft (2) bearing the distributor disc, wherein the rotational speed sensor is accommodated, in particular, in the bearing housing (7), and the rotational speed sensor is preferably the same sensor (10) which serves to determine the torque.

13. Disc distributor according to one of Claims 10 to 12, **characterized in that** the drive element (3) comprises an angular gear (3, 4), to which the drive of the centrifugal disc can be connected directly or with the intermediate arrangement of further components of the drive train.

14. Disc distributor according to one of Claims 7 to 13, **characterized in that** the sensor (10) determines in a contactless fashion the torsion, representative of the torque, of the shaft (2) bearing the distributor disc, or of the part (11) which is connected thereto in a rotationally fixed fashion, wherein the shaft (2) bearing the distributor disc or the part (11) which is connected thereto in a rotationally fixed fashion is fabricated, in particular at least at its axial section which is equipped with the sensor (10), from a permanently magnetic material, such as ferromagnetic or ferrimagnetic material, and the sensor (10) determines, in the event of torsion, the change in the magnetic field of the shaft (2) or of the part (11) which is connected thereto in a rotationally fixed fashion.

15. Disc distributor according to Claim 14, **characterized in that** the sensor (10) is a flux gate magnetometer.

## Revendications

1. Procédé pour déterminer le débit massique réel d'un produit dispersible pouvant être distribué par au moins un organe de dosage réglable d'un épandeur à disques d'au moins un disque de répartiteur associé à l'organe de dosage, un débit massique théorique du produit dispersible étant déterminé à l'aide d'un appareil de réglage commandé par ordinateur en fonction d'au moins un paramètre sélectionné dans le groupe :
- vitesse d'avancée actuelle de l'épandeur à disques ;
- quantité d'épandage théorique par surface ; et
- largeur de travail
et l'organe de dosage étant réglé en fonction du débit massique théorique ainsi déterminé et le débit massique réel du produit dispersible distribué à l'aide du disque de répartiteur étant déterminé sans contact par capteur en calculant le couple de rotation représentatif du débit massique réel dans une chaîne cinématique d'un entraînement du disque de répartiteur, **caractérisé en ce que** le couple de rotation est déterminé :
- au niveau d'un arbre (2) de la chaîne cinématique supportant le disque de répartiteur ; ou
- au niveau d'une partie reliée solidairement en rotation à un arbre (2) supportant le disque de répartiteur, notamment une douille (11),
à l'aide d'un capteur sans contact (10), l'arbre (2) supportant le disque de répartiteur étant disposé (6a) d'une part au niveau d'une section axiale disposée entre le disque de répartiteur et le capteur (10) et disposé (6b, 6e) d'autre part au niveau d'une section axiale disposée au niveau du côté, opposé au disque de répartiteur, du capteur (10).

2. Procédé selon la revendication 1, **caractérisé en ce que** d'une part un couple de rotation à vide est déterminé lorsque l'organe de dosage est fermé puis que le disque de répartiteur est non sollicité, d'autre part qu'un couple de rotation total est déterminé lors de la sollicitation du disque de répartiteur en débit massique, après quoi le couple de rotation à vide est soustrait du couple de rotation total, pour déterminer le couple de rotation induit uniquement par le débit massique du produit dispersible.

3. Procédé selon la revendication 1 ou 2, **caractérisé en ce qu'**en cas d'écart du débit massique réel déterminé par rapport au débit massique théorique supérieur à une valeur maximale prédéfinie, l'organe de dosage est réglé de nouveau, notamment à l'aide d'au moins une courbe caractéristique débit massique/couple de rotation mémorisée dans l'ordinateur ou d'une caractéristique débit massique/couple de rotation mémorisée dans l'ordinateur, jusqu'à ce que l'écart du débit massique réel déterminé par rapport au débit massique théorique passe en dessous d'une valeur maximale prédéfinie.

4. Procédé selon l'une quelconque des revendications 1 à 3, **caractérisé en ce que** le couple de rotation de l'arbre (2), supportant le disque de répartiteur, de la chaîne cinématique ou de la partie (11) y étant reliée solidairement en rotation est déterminé sans contact en déterminant par capteur sa torsion représentative du couple de rotation.

5. Procédé selon la revendication 4, **caractérisé en ce que** l'arbre (2) supportant le disque de répartiteur ou la partie (11) y étant reliée solidairement en rotation est magnétisée à partir d'un matériau à aimant permanent, ferro ou ferrimagnétique et que la variation du champ magnétique en cas de torsion de l'arbre (2) ou de la partie (11) y étant reliée solidairement en rotation est déterminée par capteur, notamment à l'aide d'au moins un dispositif de mesure d'aimant fluxgate (10).

6. Procédé selon l'une quelconque des revendications 1 à 5, **caractérisé en ce que** la vitesse de rotation de l'arbre (2) est en outre déterminée par capteur, notamment à l'aide d'un capteur sans contact, la vitesse de rotation de l'arbre (2) étant déterminée notamment à l'aide de celui-ci, pour déterminer le capteur (10) servant le couple de rotation.

7. Épandeur à disques, notamment de mise en oeuvre d'un procédé selon l'une quelconque des revendications précédentes, avec au moins un disque de répartiteur est transposable en rotation à partir d'une chaîne cinématique d'un entraînement et avec au moins un organe de dosage réglable auquel le disque de répartiteur est associé, l'organe de dosage réglable pouvant être commandé par un appareil de réglage commandé par ordinateur, en ce qu'au moins un paramètre sélectionné dans le groupe composé par :
- la vitesse d'avancée actuelle de l'épandeur à disques ;
- la quantité d'épandage théorique par surface ; et
- la largeur de travail
pour le saisir dans l'ordinateur, pour déterminer à partir de cette information un débit massique théorique et l'organe de dosage pouvant être réglé selon le débit massique théorique ainsi déterminé, la chaîne cinématique du disque de répartiteur étant équipée avec au moins un capteur sans contact (10) pour détecter le couple de rotation, pour déterminer à partir du couple de rotation déterminé par capteur le débit massique réel du produit dispersible épandable à l'aide du disque de répartiteur, **caractérisé en ce que** le capteur (10) est en liaison active sans contact :
- avec l'arbre (2) de la chaîne cinématique supportant le disque de répartiteur ; ou
- avec une partie reliée solidairement en rotation à l'arbre (2) supportant le disque de répartiteur, notamment avec une douille (11),
l'arbre (2) supportant le disque de répartiteur étant disposé (6a) d'une part au niveau d'une section axiale disposée entre le disque de répartiteur et le capteur (10) et étant disposé (6b, 6e) au niveau d'une section axiale disposée au niveau du côté, opposé au disque de répartiteur, du capteur (10).

8. Épandeur à disques selon la revendication 7, **caractérisé en ce que** l'appareil de réglage commandé par ordinateur est réalisé pour déterminer le couple de rotation uniquement actionné par le débit massique du produit dispersible, en soustrayant un couple de rotation à vide déterminé lorsque l'organe de dosage est fermé puis que le disque de répartiteur est non chargé à un couple de rotation total déterminé lors de la sollicitation du disque de répartiteur avec le débit massique.

9. Épandeur à disques selon la revendication 7 ou 8, **caractérisé en ce que** l'appareil de réglage assisté par ordinateur réglant de nouveau, en cas d'écart du débit massique réel déterminé par rapport au débit massique théorique supérieur à une valeur maximale prédéfinie, l'organe de dosage, notamment à l'aide d'au moins une courbe caractéristique débit massique/couple de rotation mémorisée dans l'ordinateur ou d'une caractéristique débit massique/couple de rotation mémorisée dans l'ordinateur, jusqu'à ce que l'écart du débit massique réel déterminé par rapport au débit massique théorique passe en dessous de la valeur maximale prédéfinie.

10. Épandeur à disques selon l'une quelconque des revendications 7 à 9, **caractérisé en ce que** le capteur (10) est disposé au niveau d'une section axiale de l'arbre (2) supportant le disque de répartiteur se trouvant entre le disque de répartiteur et un organe d'entraînement (3), disposé dans la région de son extrémité opposée, de l'arbre (2).

11. Épandeur à disques selon l'une quelconque des revendications 7 à 10, **caractérisé en ce que** l'unité constituée à partir de :
- l'arbre (2) supportant le disque de répartiteur de la chaîne cinématique ;
- le cas échéant la partie (11) y étant reliée solidairement en rotation ;
- le capteur (10) en liaison active avec l'arbre (2) ou la partie (11) y étant reliée solidairement en rotation ;
- le palier (6a, 6b, 6e) de cet arbre (2) ; et
- son organe d'entraînement (3) ;
est reçue dans un carter de palier de roulement (7).

12. Épandeur à disques selon l'une quelconque des revendications 7 à 11, **caractérisé en ce qu'**en outre au moins un capteur de vitesse de rotation est prévu, notamment sans contact, pour déterminer par capteur la vitesse de rotation de l'arbre (2) supportant le disque de répartiteur, le capteur de vitesse de rotation étant notamment amené dans le carter de palier de roulement (7) et le capteur de vitesse de rotation étant de préférence le même capteur (10) servant pour déterminer le couple de rotation.

13. Épandeur à disques selon l'une quelconque des revendications 10 à 12, **caractérisé en ce que** l'organe d'entraînement (3) comprend un engrenage angulaire (3, 4) auquel l'entraînement du disque d'épandage peut être raccordé directement ou en agençant entre des composants supplémentaires de la chaîne cinématique.

14. Épandeur à disques selon l'une quelconque des revendications 7 à 13, **caractérisé en ce que** le capteur (10) détermine sans contact la torsion, représentative du couple de rotation, de l'arbre (2) supportant le disque de répartiteur ou de la partie (11) y étant reliée solidairement en rotation, l'arbre (2) supportant le disque de répartiteur ou la partie (11) y étant reliée solidairement en rotation étant notamment fabriqué à partir d'au moins un matériau à aimant permanent, par exemple un matériau ferro ou ferrimagnétique, au niveau de sa section axiale équipée du capteur (10) et le capteur (10) déterminant par torsion la variation du champ magnétique de l'arbre (2) et/ou de la partie (11) y étant reliée solidairement en rotation.

15. Épandeur à disques selon la revendication 14, **caractérisé en ce que** le capteur (10) est un dispositif de mesure d'aimant fluxgate.
